# EUROPÄISCHE PATENTSCHRIFT

(11) **EP 0 776 428 B1**
(45) Veröffentlichungstag und Bekanntmachung des Hinweises auf die Patenterteilung: **04.11.1998**
(21) Anmeldenummer: 95929857.1
(22) Anmeldetag: 12.08.1995
(51) Int. Cl.: F16D 65/04

(54) **SCHWIMMSATTEL-SCHEIBENBREMSE FÜR KRAFTFAHRZEUGE**
FLOATING CALLIPER DISK BRAKE FOR MOTOR VEHICLES
FREIN A DISQUE A ETRIER FLOTTANT POUR VEHICULES A MOTEUR

(30) Priorität: 27.08.1994 DE 4430459
(43) Veröffentlichungstag der Anmeldung: 04.06.1997
(73) Patentinhaber: ITT Automotive Europe GmbH, 60488 Frankfurt am Main (DE)
(72) Erfinder: WEILER, Rolf, D-65817 Eppstein (DE); STÖRZEL, Karl, D-63303 Dreieich (DE); SCHIEL, Wolfgang, D-65936 Frankfurt am Main (DE)
(74) Vertreter: Grau, Ulf
(86) Internationale Anmeldenummer: EP9503203
(87) Internationale Veröffentlichungsnummer: WO9607032

(56) Entgegenhaltungen:
- DE-A- 2 919 537
- DE-A- 3 445 488
- DE-A- 3 918 011
- DE-C- 2 954 459
- GB-A- 1 387 246
- GB-A- 2 216 204
- SE-A- 8 601 638

## Beschreibung

Die Erfindung betrifft eine Schwimmsattel-Scheibenbremse für Kraftfahrzeuge gemäß dem Oberbegriff des Patentanspruchs 1.

Eine gattungsgemäße Scheibenbremse ist aus der DE 38 15 733 A1 bekannt. Bei der bekannten Scheibenbremse ist ein Schwimmsattel an einem Bremsträgerteil eines Achsschenkels axial verschiebbar geführt. Ein äußerer Bremsbelag ist mittels einer Blattfeder an einem äußeren Schenkel des Schwimmsattels befestigt. Der äußere Schenkel des Schwimmsattels ist über die genannte Blattfeder und über eine zusätzliche Drahtfeder am Bremsträgerteil elastisch abgestützt. Bei ungebremster Fahrt kommt es zu Klappergeräuschen, da der äußere Bremsbelag in seiner Führung am Bremsträgerteil aufgrund des funktionsbedingten Spiels eine gewisse Bewegungsfreiheit hat, die auch durch die elastische Anbindung an den äußeren Schenkel des Schwimmsattels nicht wesentlich eingeschränkt wird.

Aufgabe der Erfindung ist es, eine gattungsgemäße Scheibenbremse zu verbessern, so daß Klappergeräusche bei ungebremster Fahrt nicht mehr auftreten können.

Die Lösung der Aufgabe ergibt sich aus dem kennzeichnenden Teil des Patentanspruchs 1. Bei dem erfindungsgemäßen Schwimmsattel ist der äußere Bremsbelag am äußeren Schenkel in Umfangsrichtung abgestützt und daher in seiner Bewegungsmöglichkeit derart eingeschränkt, daß ein Klappern in seinen Führungen am Bremsträgerteil nicht mehr auftreten kann. Dabei wird jedoch die elastische Abstützung des Schwimmsattels in radialer Richtung nicht beeinträchtigt.

In einer bevorzugten Ausführungsform gemäß Anspruch 2 ist der äußere Schenkel des Schwimmsattels mit seitlichen Nuten versehen, in die die Vorsprünge des äußeren Bremsbelags eingreifen. Durch derartige Nuten wird zusätzlich die Bewegungsfreiheit des äußeren Bremsbelags in Axialrichtung eingeschränkt und gleichzeitig seine Führung in Umfangsrichtung verbessert.

Ein Ausführungsbeispiels der Erfindung wird nachfolgend anhand der Zeichnungen näher erläutert.

Es zeigen:

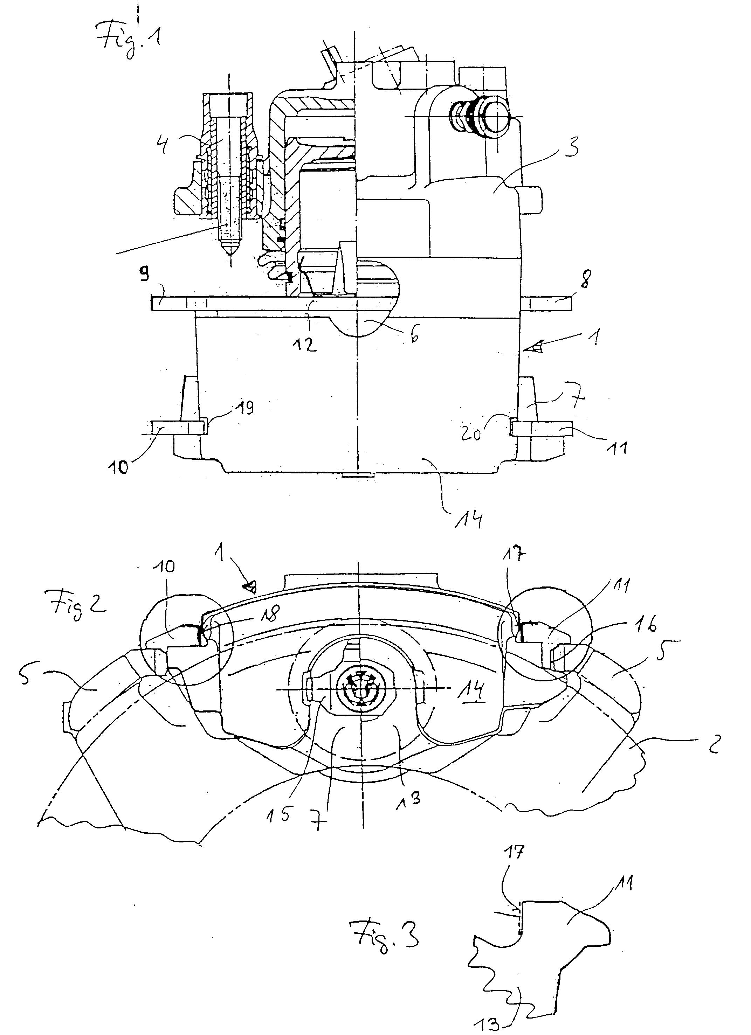

- Figur 1: eine teilweise geschnittene Draufsicht auf eine erfindungsgemäße Scheibenbremse,
- Figur 2: eine Seitenansicht auf die Scheibenbremse von Figur 1 von der äußeren Axialseite,
- Figur 3: eine vergrößerte Teilansicht eines Vorsprungs einer Rückenplatte des äußeren Bremsbelags.

Eine erfindungsgemäße Schwimmsattel-Scheibenbremse für Kraftfahrzeuge besitzt einen Schwimmsattel 1, der den äußeren Rand einer Bremsscheibe 2 U-förmig umgreift. Ein axial innerer Schenkel 3 des Schwimmsattels 1 ist mittels Bolzenführungen 4 an einem Bremsträgerteil 5 eines nicht gezeigten Achsschenkels des Fahrzeugrades abgestützt und axial verschiebbar geführt. Beiderseits der Bremsscheibe 2 sind zwei Bremsbeläge 6,7 angeordnet, die mit seitlichen Vorsprüngen 8,9,10,11 ihrer Rückenplatten 12,13 am Bremsträgerteil 5 abgestützt sind. Ein äußerer Schenkel 14 des Schwimmsattels 2 ist am äußeren Bremsbelag 7 mittels einer Blattfeder 15 befestigt und elastisch abgetützt.

Um ein Klappern des äußeren Bremsbelags 7 aufgrund des funktionsbedingten Spiels 16 in seinen Führungen am Bremsträgerteil 5 bei ungebremster Fahrt zu verhindern, sind die Vorsprünge 10,11 der Rückenplatte 13 des äußeren Bremsbelags 7 in Umfangsrichtung nach innen hin bis zur Anlage an einer Anlagefläche 17,18 des Schwimmsattels 2 verlängert. Dadurch liegt der äußere Bremsbelag 7 mit seinen Vorsprüngen 10,11 stets am äußeren Schenkel 14 in Umfangsrichtung an, wobei er am Schwimmsattel 2 festgehalten und am Klappern gehindert wird.

Zur Verbesserung der Erfindung ist vorgesehen, daß der Schwimmsattel 2 an seinem äußeren Schenkel 14 mit in Umfangsrichtung seitlich angeordneten Nuten 19,20 versehen ist, in die die Vorsprünge 10,11 des äußeren Bremsbelags 7 eingreifen. Dabei wird der äußere Bremsbelag 7 sowohl in Umfangsrichtung als auch in axialer Richtung noch besser festgehalten und gegen Klappern gesichert. Außerdem kann mit dieser Anordnung zusätzlich die Funktion einer Verwechslungssicherung erzielt werden. Wenn der innere Bremsbelag 6 entweder in der Form seiner Rückenplatte 12, der Form der Vorsprünge 8,9 oder der Form seines Reibbelags von dem äußeren Bremsbelag 7 abweichen sollte, so dürfen die Bremsbeläge 6 und 7 nicht verwechselt werden. In diesem Fall bieten die Nuten 19,20 zusammen mit den passend ausgeformten Vorsprüngen 10,11 des äußeren Bremsbelags 7 einen Schlüssel, wodurch der Einbau des inneren Bremsbelags 6 am äußeren Schenkel 14 des Schwimmsattels 2 ausgeschlossen werden kann.

## Patentansprüche

1. Schwimmsattel-Scheibenbremse für Kraftfahrzeuge, mit einem Schwimmsattel (1), der den äußeren Rand einer Bremsscheibe (2) U-förmig umgreift und der mit einem axial inneren Schenkel (3) mittels Bolzenführungen (4) an einem Bremsträgerteil (5) eines Achsschenkels des Fahrzeugrades abgestützt und axial verschiebbar geführt ist, mit beiderseits der Bremsscheibe (2) angeordneten Bremsbelägen (6,7), die mit seitlichen Vorsprüngen (8,9,10,11) ihrer Rückenplatten (12,13) am Bremsträgerteil (5) abgestützt sind, wobei ein axial äußerer Schenkel (14) des Schwimmsattels (1) am äußeren Bremsbelag (7) mittels einer Blattfeder (15) befestigt und elastisch abgestützt ist, dadurch **gekennzeichnet**, daß die Vorsprünge (10,11) der Rückenplatte (13) des äußeren Bremsbelags (7) in Umfangsrichtung nach innen hin bis zur Anlage am Schwimmsattel (1) verlängert sind, um ein Klappern des Bremsbelags (7) bei ungebremster Fahrt zu verhindern.

2. Scheibenbremse nach Anspruch 1, dadurch **gekennzeichnet**, daß der Schwimmsattesl (1) an seinem äußeren Schenkel (14) mit seitlichen Nuten (19,20) zum Eingriff der Vorsprünge (10,11) des äußeren Bremsbelags (7) versehen ist.

## Claims

1. Floating-caliper disc brake for automotive vehicles, including a floating caliper (1) which straddles the outward edge of a brake disc (2) in a U-shaped manner and which, by way of an axially inward leg (3), is supported and axially slidable on a brake carrier part (5) of a steering knuckle of the vehicle wheel by way of pin guides (4), including brake shoes (6, 7) arranged on either side of the brake disc (2) and supported on the brake carrier part (5) by lateral projections (8, 9, 10, 11) of their back plates (12, 13), wherein an axially outward leg (14) of the floating caliper (1) is attached and elastically supported on the outward brake shoe (7) by a leaf spring (15),
**characterized** in that the projections (10, 11) of the back plate (13) of the outward brake shoe (7) are extended inwardly in a circumferential direction until they abut on the floating caliper (1) to prevent rattling of the brake shoe (7) during unbraked driving.

2. Disc brake as claimed in claim 1,
**characterized** in that the floating caliper (1) includes lateral grooves (19, 20) on its outward leg (14) for engagement by the projections (10, 11) of the outward brake shoe (7).

## Revendications

1. Frein à disque à écrier flottant pour véhicule automobile, comprenant un étrier de frein (1), qui entoure à la façon d'un U le bord extérieur d'un disque de frein (2) et qui prend appui et est guidé en coulissement axial, par une branche axialement intérieure (3) et à l'aide de moyens de guidage à broche (4), sur une partie de support de frein (5) d'une fusée d'essieu de la roue de véhicule, et des garnitures de frein (6, 7) qui sont disposées de part et d'autre du disque de frein (2) et prennent appui sur la partie de support de frein (5) par des saillies latérales (8, 9, 10, 11) de leurs plaquettes de support (12, 13), tandis qu'une branche axialement extérieure (14) de l'étrier flottant (1) est fixée, et prend appui élastiquement, sur la garniture de frein extérieure (7) au moyen d'un ressort à lame (15), caractérisé en ce que les saillies (10, 11) de la plaquette de support (13) de la garniture de frein extérieure (7) sont prolongées vers l'intérieur suivant la direction circonférentielle jusqu'à l'appui sur l'étrier flottant (1), afin d'empêcher un cliquètement de la garniture de frein (7) en conduite non freinée.

2. Frein à disque suivant la revendication 1, caractérisé en ce que, sur sa branche extérieure (14), l'étrier flottant (1) est pourvu de rainures latérales (19, 20) pour l'engagement des saillies (10, 11) de la garniture de frein extérieure (7).
